# EUROPEAN PATENT APPLICATION

(11) **EP 0 937 550 A1**
(43) Date of publication of application: **25.08.1999**
(21) Application number: 98931099.0
(22) Date of filing: 14.07.1998
(51) Int. Cl.: B25J 9/06, B25J 19/00

(54) **INDUSTRIAL ROBOT**

(30) Priority: 14.07.1997 JP 20521697
(71) Applicant: FANUC LTD, Minamitsuru-gun, Yamanashi 401-0597 (JP)
(72) Inventor: KINOSHITA, Satoshi, R.9-306, Fanuc Manshonharimomi, Yamanashi 401-0511 (JP); IWAYAMA, Takatoshi, Fanuc Dai-3 Vira-karamatsu, Yamanashi 401-0511 (JP)
(74) Representative: Billington, Lawrence Emlyn
(86) International application number: JP9803157
(87) International publication number: WO9903650

(57) **Abstract**

A robot main unit comprises a linear movement arm (3) on a column (2) fixed onto an installation surface 1, first and second rotating arms (4, 5), a tool attachment section (6a) and an arm-to-arm coupling member (13), and the like. The coupling member (13) is designed to have a sufficient interval (13a) between the arms, thereby preventing accumulation of foreign matter and making washing easier. Piping and wiring members (7) for the working tool (6b) are passed through the interior of the robot main unit, thereby increasing ease of washing in the region from the third axis onwards, where fragments of foodstuffs, and the like, are liable to become attached to the robot.

## Description

### TECHNICAL FIELD

The present invention relates to a industrial robot, and more particularly, to a industrial robot employed in a workplace where foodstuffs are handled (transporting, processing and manufacturing processes relating to foodstuffs).

### BACKGROUND ART

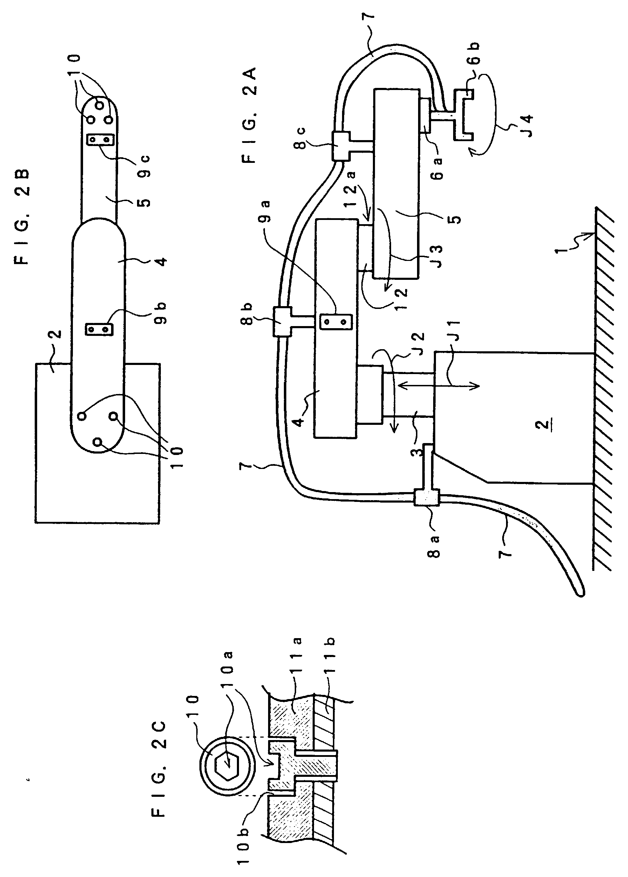

In general, a industrial robot, which is a robot used for industrial purposes (hereinafter, referred to simply as a "robot"), is provided with taps and holes for installing equipment onto the main unit of the robot, so that wiring and piping to the end effector can be made easily. One example of such a robot is described here with reference to Fig. 2A (side view), Fig. 2B (top view) and Fig. 2C (partial sectional view).

The robot main unit comprises: a linear movement arm 3 which is driven in a vertical direction by axis J1 (linear movement axis) with respect to a column 2; a first rotating arm 4 which is driven rotationally by axis J2 (rotational axis); a second rotating arm 5 which is driven rotationally by axis J3 (rotational axis); a tool attachment section 6a which is driven rotationally by axis J4; a coupling member 12 which couples the second axis (first rotating arm) and the third axis (second rotating arm), and the like.

A working tool 6b suited to the application is installed on the tool attachment section 6a. Numeral 7 represents a piping and wiring member for providing electricity, liquids and ventilation, etc., to a working tool 6b, and in order to hold the piping and wiring member securely and prevent it from becoming entangled, or the like, wiring and piping support members 8a, 8b, 8c provided at appropriate locations on the outer surfaces of the robot are used.

A required number of equipment installation taps 9a, 9b are provided on the side face and upper face of the first rotating arm 4. A required number of equipment installation taps 9c are also provided on the upper face of the second rotating arm 5. Further, in order to couple the robot surface member 11a with the robot internal member 11b or to do the like, hexagon socket head bolts 10 are used at various locations. As shown in an enlarged view in Fig. 2C, a hexagonal socket is formed in the head portion of each of the socket head bolts 10, and since the head portions of the bolts 10 assume a position inside the recesses (step portions) 10b of the bolt holes when the aforementioned members are fixed together by inserting, it is possible to reduce the number of projections on the outer surfaces of the robot and hence these bolts 10 have come to be used since they are advantageous in respect of the safety of the operator (because hitching is prevented).

Moreover, with respect to the coupling member 12 between the first rotating arm 4 and the second rotating arm 5, since, conventionally, priority has been given to compactness of the outer shape of the robot, a narrow gap 12a has been provided between the two arms.

However, a conventional robot having an external structure as described above is not suitable for use in the field of processing and manufacturing of foodstuffs. The reason for this is that, because the robot has the aforementioned external structure, fragments of foodstuff, liquid (water, liquid flavouring, etc.), powder, and the like, are liable to enter into the holes 10a in the bolts 10, the recesses 10b, the holes of the equipment installation taps 9a, 9b, 9c, and the like, so that it is difficult to remove them even by washing. Moreover, similar foreign matter is liable to accumulate in the wiring and piping supporting members 8a, 8b, 8c, and in the periphery of the coupling member 12 (narrow gap 12a between arms), so that it is difficult to remove them by washing.

These things will invite the growth of bacteria and the decaying of adhering fragments of food, which are undesirable from the point of view of hygiene. In order to avoid such situations, it may be considered to change the bolts, or to modify the shape of the principal component of the robot, but at present such an approach has not been adopted due to reasons of high cost, and the like, and thus, in many cases, industrial robots in general are used only with their waterproofing abilities improved at the most.

### DISCLOSURE OF THE INVENTION

It is an object of the present invention to provide an industrial robot having a largest possible freedom from accumulation of foreign matters, such as fragments of foodstuffs, liquid, powder, or the like, and being designed for easy cleaning even when the foreign matters accumulate thereon.

In order to achieve the aforementioned object, the industrial robot according to the present invention is employed in processing or manufacturing of foodstuffs, can be washed by applying water or a cleaning liquid to the outer surfaces thereof, can mount a working tool on the end of an arm having at least three degrees of freedom, and does not have any recesses where foreign matters may accumulate on the portion of the outer surfaces of the robot which ranges from the third axis to the end.

According to the present invention, fragments of foodstuffs, liquid, powder and the like, which are liable to be scattered about in a workplace where foodstuffs are being handled, are prevented from adhering readily to the robot, and furthermore since washing is made simple, so that a high level of hygiene can be guaranteed.

### BRIEF DESCRIPTION OF THE DRAWINGS

Fig. 1A is a front view showing one embodiment of a industrial robot according to the present invention;
Fig. 1B is a partial sectional view of the industrial robot in Fig. 1A;
Fig. 2A is a front view showing one example of a conventional industrial robot;
Fig. 2B is a top view of the industrial robot in Fig. 2A; and
Fig. 2C is a partial sectional view of the industrial robot in Fig. 2A.

### BEST MODE FOR CARRYING OUT THE INVENTION

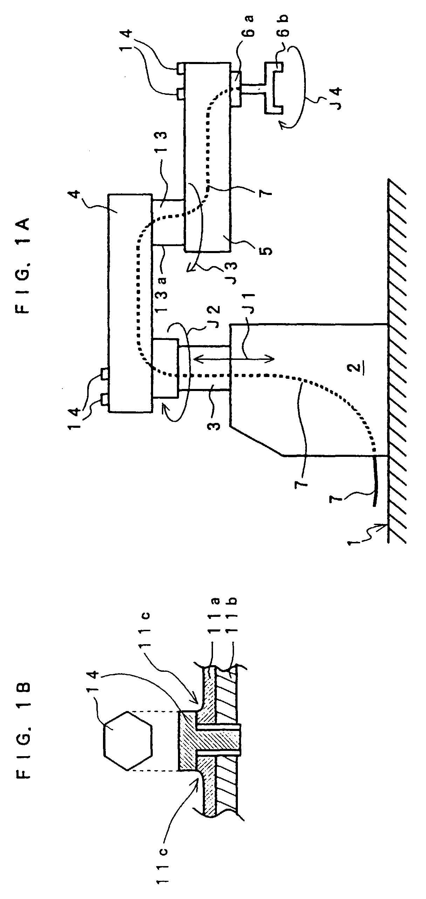

One embodiment of a industrial robot according to the present invention is now described with reference to Fig. 1A and Fig. 1B.

This industrial robot is used for processing or manufacturing foodstuffs, and it is a industrial robot (hereinafter, simply referred to as "robot",) which can be washed by applying water or a cleaning liquid to the outer surfaces thereof. The main unit of the robot comprises: a linear movement arm 3 which is driven in a vertical direction along axis J1 (linear movement axis) on a column 2 fixed to an installation surface 1; a first rotating arm 4 which is driven rotationally along axis J2 (rotational axis); a second rotating arm 5 which is driven rotationally along axis J3 (rotational axis); a tool attachment section 6a which is driven rotationally along axis J4; and a coupling member 13 which couples the second axis (the first rotating arm) with the third axis (the second rotating arm).

For the coupling member 13, a design is adopted which ensures a sufficient interval 13a between the first rotating arm 4 and the second rotating arm 5, in order that no gaps which make washing difficult to carry out are formed therebetween. It is also possible to adopt a technique whereby a sufficient interval 13a is obtained between the arms by interposing a spacing member therebetween. The robot is similar to the robot illustrated in Fig. 2 in that a working tool 6b suited to the application can be attached to the tool attachment section 6a.

Next, the external elements and the wiring and piping configuration will be described. Numeral 7 denotes a piping and wiring member for the purpose of supplying electricity, liquids, ventilation, and the like, to the working tool 6b, but in the present embodiment, rather than providing the wiring and piping externally, a method is adopted whereby it passes through the interior of the robot main unit from the base section (column 2) of the robot to the working tool attachment section 6a, as indicated by the broken line in the drawing.

With this method, it becomes unnecessary to provide wiring and piping supporting members 8a, 8b, 8c such as those illustrated in Fig. 2A on the outer surfaces of the robot. Consequently, the smoothness of the outer shape of the robot is increased. In particular, the fact that there is no wiring and piping 7 or supporting members thereof installed on the outer surfaces of the robot in the region ranging from the tool attachment section 6a to the second rotating arm 5 (third axis), where the fragments of foodstuffs and the like are most likely to become attached, is beneficial in that it improves the ease of washing the region of the robot where fragments of foodstuff are mostly liable to adhere.

Further, in the robot according to the present invention, by removing equipment installation taps 9a, 9b, 9c such as those illustrated in Fig. 2A and Fig. 2B from the outer surfaces of the robot, the property of the external shape of the robot to allow accumulation of foreign matter is reduced, and ease of washing is further improved.

Furthermore, as shown in Fig. 1B, hexagonal head bolts 14 which do not have an exposed hole therein are used as the fixing members for coupling the external members 11a of the robot and the internal members 11b of the robot, and the like. Moreover, the outer surfaces of members which are exposed externally (external members 11a of the robot) are formed with a raised section 11c having a gradient covering the regions surrounding the bolt holes formed therein (regions surrounding the fixing points), in order to prevent accumulation of foreign matter in the vicinity of the bolt heads and to simplify washing.

## Claims

1. A industrial robot employed in processing or manufacturing of foodstuffs, which can be washed by applying water or a cleaning liquid to the outer surfaces thereof, wherein,
a working tool can be mounted on the end of an arm having at least three degrees of freedom, and no recesses where foreign matters may accumulate are present on the portion of the outer surface of the robot which ranges from the third axis to the end thereof.

2. The industrial robot according to claim 1, wherein no narrow gap in which foreign matter may accumulate is present on the portion of the outer surface of the robot which ranges from the third axis to the end thereof.

3. The industrial robot according to claim 1 or claim 2, wherein said working tool mounted on the end of said arm having three degrees of freedom has at least one degree of freedom so that the orientation of the working tool can be changed.

4. The industrial robot according to claim 1, wherein, at least, wiring and piping members for said working tool are not exposed on the outer surfaces of the robot between the third axis and the installation section for said working tool, at the least.

5. The industrial robot according to claim 1, wherein fastening members which do not have open holes formed therein are used for fastening members which are exposed on the outer surfaces of the robot.

6. The industrial robot according to claim 5, wherein raised sections having a gradient are provided in the vicinity of the fastening points of said fastening members.

7. A industrial robot having a first rotating arm and a second rotating arm, which is connected to said first rotating arm by means of a coupling member and on which a tool attachment section is provided, wherein
the outer surfaces of said second rotating arm are formed to have a smooth surface with the exception of the region where said coupling member is connected and the region where said tool attachment section is connected.

8. The industrial robot according to claim 7, wherein only bolts having no open holes therein project from the aforementioned outer surfaces formed to have a smooth surface.
